# EUROPEAN PATENT SPECIFICATION

(11) **EP 0 601 981 B1**
(45) Date of publication and mention of the grant of the patent: **28.04.1999**
(21) Application number: 93830395.5
(22) Date of filing: 29.09.1993
(51) Int. Cl.: A47L 9/24, A47L 11/34

(54) **Flexible hose for washing exhausting machines for cleaning floors, moquettes, carpets and the like**
Flexibler Schlauch für Teppich-, Bodenreinigungsgeräte
Tuyau flexible pour machines de nettoyage de sols, tapis et carpettes

(30) Priority: 25.11.1992 IT MI921012 U
(43) Date of publication of application: 15.06.1994
(73) Proprietor: Tamborini, Ariberto, I-21020 Daverio (Varese) (IT); Tamborini, Giancarlo, I-21020 Daverio (Varese) (IT)
(72) Inventor: Tamborini, Ariberto, I-21020 Daverio (Varese) (IT); Tamborini, Giancarlo, I-21020 Daverio (Varese) (IT)
(74) Representative: Cicogna, Franco

(56) References cited:
- EP-A- 0 558 460
- WO-A-86/07124
- DE-A- 2 246 217
- FR-A- 2 376 651
- US-A- 4 064 355
- US-A- 4 517 404

## Description

### BACKGROUND OF THE INVENTION

The present invention relates to an improved flexible hose provided for application to washing-exhausting machines used for cleaning floors, moquettes, carpets and the like.

As is known, for cleaning floors, moquettes and the like there are used at present washing-exhausting cleaning machines.

Usually, these machines are provided, in the inside thereof, with an exhausting device, to which a flexible hose or pipe element is connected, projecting from the machine casing and provided, at one end thereof, with a shaped outlet assembly.

These cleaning machines, moreover, further comprise a cleaning liquid tank, therefrom the cleaning liquid held therein is sent, by means of a suitable pump, to a delivery pipe element which ends near the outlet of the exhausting pipe.

This delivery pipe element generally has a cross-section which is much smaller than that of the exhausting pipe element, and being connected to to latter by means of suitable clamping bands arranged at set distances along the overall length of the pipe.

This type of coupling causes a lot of drawbacks.

In fact, during the operation of the cleaning machine, the delivery pipe element portions included between the clamping bands form loops moving away from the exhausting pipe element and frequently contacting furniture pieces and other objects and being entangled thereby.

Moreover, the mentioned clamping bands can be easily broken or entangled with portions of the cleaning machines, thereby preventing the machine from properly operating.

The document US-A-4 064 355, on which the preamble of the main claim has been based, discloses a polymeric flexible hose construction and method for making it, wherein the hose construction comprises a tubular wall defining a main longitudinal extending passage for conveying a fluid therethrough and a second wall adjoining the tubular wall and defining a second longitudinally extending passage for an electric conductor with the second wall having a wall portion common with the tubular wall.

This prior hose is not designed for conveying through the second longitudinally extending passage a cleaning liquid, but the second passage is exclusively designed for holding therein an electric cable.

The document WO-86/07124 discloses a flexible hose for the inward and/or outward flow of a pneumatic pressure medium used for operating an operating component. On the periphery of the hose is located at least one support which extend only partially through the length of the hose, for the attachment of at least one feedline which provides the supply to the operating component and which, for example, may be in the form of an electric connection cable, a compressed air hose or similar.

The document DE-A-2 246 217 discloses a two-hose construction in which two flexible hoses are overlapped onto one another. No electric connection cable is herein provided.

The document US-A-4 517 404 discloses a multiple fluid conveying hose assembly comprising a principal vacuum conveying hose for a vacuum cleaning system and the smaller diameter liquid conveying hose passing through its interior. A molded end connector on the principal hose provides an outlet for the smaller hose and serves to separate the ends of the two hoses for use. Alternatively, the hose may utilize reinforcing wire coils which also serve as electric conductors.

The document FR-A-78 00413 discloses a suction cleaning hose comprising an elongated pipe element and an electric cable extending through the overall length of the hose, the electric cable passing through a restraining element arranged in a hollow provided between inner and outer elements of the hose.

Finally, the document EP-A-558 460 in the name of the same Applicant discloses an exhausting pipe and an adjoining cleaning liquid delivery pipe: the delivery pipe can not be used for holding therein a power supply electric cable since, in such an event, the washing machine to which the flexible hose is coupled could not be able of operating.

### SUMMARY OF THE INVENTION

Accordingly, the aim of the present invention is to overcome the above mentioned drawbacks, by providing an improved flexible hose which can be handled in a very easy manner, is devoid of any entanglement problems, and which is coupled to an auxiliary duct designed for either holding therein an electric cable or for operating as an auxiliary fluid conveying duct.

Within the scope of the above mentioned aim, a main object of the present invention is to provide such an improved flexible hose which can be quickly associated to the body or casing of the cleaning machine and related exhausting outlet and which, moreover, can be made with any desired length and size, depending on the specific working requirements.

Another object of the present invention is to provide such a flexible hose which is very reliable and safe in operation and which, moreover, can be made by using easily available elements and materials.

Yet another object of the present invention is to provide such a flexible hose which is very competitive from a mere economic standpoint.

According to one aspect of the present invention, the above mentioned aim and objects, as well as yet other objects, which will become more apparent hereinafter, are achieved by an improved flexible hose for application to washing-exhausting machine for cleaning floors, moquettes, carpets and the like, according to the main claim.

### BRIEF DESCRIPTION OF THE DRAWINGS

Further characteristics and advantages of the present invention will become more apparent hereinafter from the following detailed disclosure of a preferred, though not exclusive, embodiment thereof, which is illustrated, by way of an indicative, but not limitative, example, in the figures of the accompanying drawings, where:

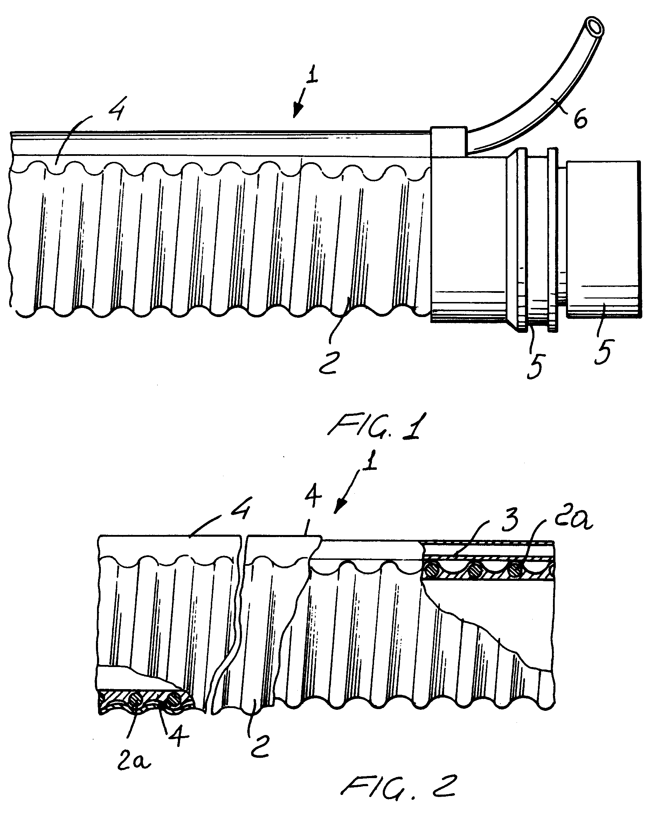

Figure 1 is a side view of a portion of the improved flexible hose according to the present invention and clearly illustrating the component parts thereof;
Figure 2 is a further partially cross-sectioned side view of a length of the subject flexible hose;

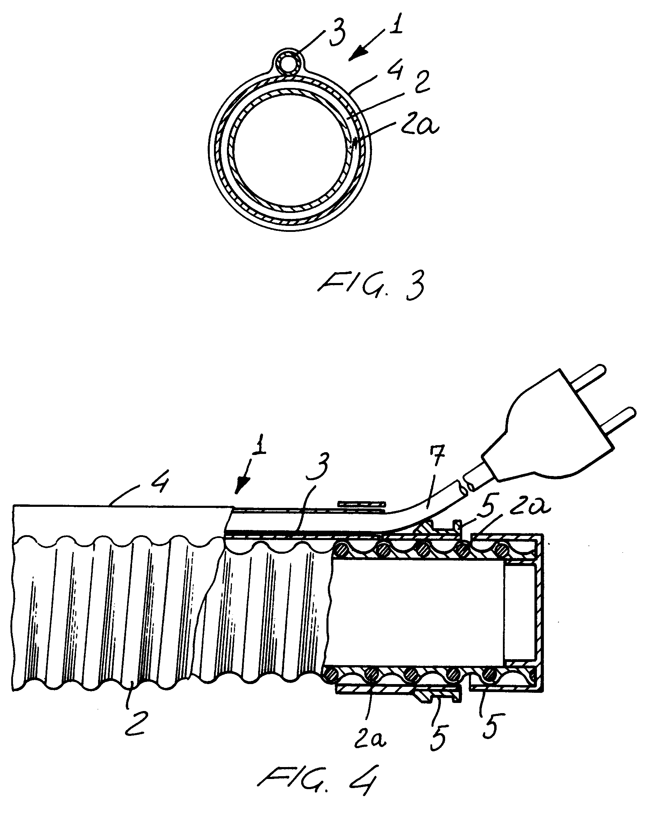

Figure 3 is a side cross-sectional view of the flexible hose of the invention; and
Figure 4 is a partially cross-sectioned side view of the flexible hose of the invention according to, a variation thereof in which the semi-rigid pipe element 3 operates as a seat for housing or engaging therein an electric cable.

### DESCRIPTION OF THE PREFERRED EMBODIMENTS

With reference to the number references of the figures of the accompanying drawings, the improved flexible hose according to the present invention, specifically designed for application to washing-exhausting machines for cleaning floors, moquettes, carpets and the like, and which has been generally indicated at the reference number 1, comprises a coiled exhausting pipe element 2 and at least a flexible semi-rigid pipe element 3.

The exhausting pipe element 2 can comprise any known types of pipe, for example a plastic material pipe having a coiled reinforcement 2a and provided with good flexibility properties.

The flexible pipe element 3 is also of a semi-rigid type, and has a diameter less than that of the pipe element 2.

These pipes are arranged adjoining one another, and are connected to one another by means of an encompassing tubular sheath element 4, preferably made of a plastic material, which covers the overall length of said pipes.

More specifically, the encompassing tubular sheath 4 is arranged to encompass the pipe elements 2 and 3 and can be bound to said pipe elements by means of any known bonding methods, such as, for example, thermomolding methods and vacuum forming methods, so as to withdraw any air present between the two pipe elements 2 and 3 and the encompassing tubular sheath 4, and so as to cause said encompassing sheath 4 to adhere to the exhausting pipe element 2 and semi-rigid pipe element 3, to firmly connect this pipes.

The material forming the encompassing tubular sheath will be such as not to stiffen the two pipe elements 2 and 3, to assure a given flexibility for the thus formed single body construction.

Near the end portions of the exhausting pipe element 2 there are connected end bodies 5, for example molded sleeves, defining the inlet or outlet of the exhausting pipe element and which can be respectively connected to an exhausting outlet assembly of any known types, or to the casing of the cleaning machine.

The main feature of the present invention is that the above mentioned semi-rigid flexible pipe element 3 can be used as a seat for engaging therein a further pipe element 6 made of any suitable semi-rigid plastic material.

According to a possible variation of the present invention, the pipe element 3 can be used as a seat for housing therein an electric cable of the same cleaning machine, as shown for example in Figure 4.

The flexible hose according to the present invention can be practically made in lengths of a comparatively great extension, and being then cut into shorter lengths, depending on the specific requirements.

Thus, a flexible pipe construction is obtained, which can be fitted to any applications and which can not be accidentally entangled against furniture pieces, or other objects.

In this connection it should be apparent that the cutting of the improved hose of the invention and the introduction thereinto of the electric cable 7 or of the semi-rigid flexible pipe 6 can be made directly by the user.

From the above disclosure it should be apparent that the invention fully achieves the intended aim and objects.

In this connection, it is desired to point out the great functionality and facility of use characterizing the improved flexible hose according to the invention.

Moreover, if desired, it will be also possible to provide two or more semi-rigid flexible pipe elements 3, in the case, for example, in which it is desired to house several semi-rigid flexible pipe elements 6 for cleaning liquids or one or more electric cables 7.

The invention as disclosed is susceptible to several variations and modification all coming within the scope of the inventive idea.

Moreover, all of the details can be replaced by other technically equivalent elements.

In practicing the invention, the used materials,provided that they are compatible to the intended use, as well as the contigent size and shapes, can be any according to requirements.

## Claims

1. An improved flexible hose (1) for use in a washing-exhausting machine for cleaning floors, moquettes and carpets, said washing-exhausting machine being power-supplied by an electric cable (7) and being supplied by a cleaning liquid through a cleaning liquid delivery semi-rigid pipe (6), comprising an exhausting pipe element (2) and at least a second pipe element (3) extending along and adjoining said exhausting pipe element and coupled to said exhausting pipe element (2), characterized in that said at least second pipe element (3) is semi-rigid, that in said at least second pipe element (3) said cleaning liquid delivery semi-rigid pipe (6) or said electric cable (7) can be threaded and that a tubular coating sheath (4) is arranged about and bound to said exhausting (2) and second semi-rigid (3) pipe elements, to firmly connect said exhausting pipe element (2) and at least second pipe element (3).

2. A flexible hose, according to Claim 1, characterized in that said exhausting pipe element (2) comprises a pipe element made of a plastic material reinforced by a coiled reinforcing element (2a).

3. A hose according to Claims 1 and 2, characterized in that said exhausting pipe element, said at least second pipe element (3) and said tubular sheath (4) form a flexible single body construction.

4. A hose according to one or more of the preceding claims, characterized in that said tubular sheath (4) is firmly bound on said exhausting pipe element (2) and on said at least second pipe element (3) by a thermomolding method or a vacuum molding method.

5. A hose according to one or more of the preceding claims, characterized in that said hose (1) comprises, at at least a longitudinal end portion thereof, an end body (5) defining an inlet or outlet fitting of the exhausting pipe element (2).

6. A hose according to one or more of the preceding claims, characterized in that said en body (5) comprises a molded sleeve element which can be coupled with an exhausting outlet or to the casing of the cleaning machine.

## Patentansprüche

1. Ein verbesserter flexibler Schlauch (1) für die Anwendung mit einem Waschsauger, der für die Reinigung von Böden, Teppichböden und Teppichen eingesetzt wird, wobei dieser Waschsauger von einem elektrischen Kabel (7) mit Strom versorgt wird und mit Reinigungsflüssigkeit durch ein halbsteifes Reinigungsflüssigkeitsrohr (6), das ein Saugrohrteil (2) und mindestens ein zweites Rohrteil (3) umfaßt, das sich entlang diesem Saugrohrteil erstreckt und daran anliegt und an diesem Saugrohrteil (2) befestigt ist, dadurch gekennzeichnet, daß dieses mindestens eine, zweite Rohrteil (3) halbsteif ist, daß dieses halbsteife Reinigungsflüssigkeitsförderrohr (6) oder dieses elektrische Kabel (7) durch dieses mindestens eine, zweite Rohrteil (3) geführt werden können und daß eine umgebende Rohrhülle (4) um dieses Saugrohrteil (2) und dieses zweite halbsteife Rohrteil (3) angeordnet und daran befestigt ist, um dieses Saugrohrteil (2) und dieses mindestens eine, zweite halbsteife Rohrteil (3) fest miteinander zu verbinden.

2. Ein flexibler Schlauch nach Anspruch 1, dadurch gekennzeichnet, daß dieses Saugrohrteil (2) ein aus Kunststoffmaterial gefertigtes Rohrteil umfaßt, das von einem spiralförmig gewundenen Element (2a) verstärkt wird.

3. Ein Schlauch nach den Ansprüchen 1 und 2, dadurch gekennzeichnet, daß dieses Saugrohrteil, dieses mindestens eine, zweite Rohrteil (3) und diese Rohrhülle (4) einen flexiblen, einteiligen Aufbau bilden.

4. Ein Schlauch nach einem oder mehreren der vorhergehenden Ansprüche, dadurch gekennzeichnet, daß diese Rohrhülle (4) fest auf diesem Saugrohrteil (2) und auf diesem mindestens einen, zweiten Rohrteil (3) durch Warmformen oder Vakuumformgebung befestigt ist.

5. Ein Schlauch nach einem oder mehreren der vorhergehenden Ansprüche, dadurch gekennzeichnet, daß dieser Schlauch (1) zumindest an einem längsseitigen Endbereich davon ein Endstück (5) umfaßt, das ein Einlaß- oder Auslaßstück des Saugrohrteils (2) bildet.

6. Ein Schlauch nach einem oder mehreren der vorhergehenden Ansprüche, dadurch gekennzeichnet, daß dieses Endstück (5) eine gegossene Muffe umfaßt, die mit einem Sauganschluß oder dem Gehäuse der Reinigungsmaschine verbunden werden kann.

## Revendications

1. Tuyau flexible amélioré (1) pour utilisation dans une machine de lavage par échappement pour le nettoyage de sols, moquettes et carpettes ou tapis, ladite machine de nettoyage par échappement étant alimentée en énergie par un câble électrique (7) et étant alimentée en liquide de nettoyage au moyen d'un conduit semi-rigide de délivrance ou d'alimentation en liquide de nettoyage (6), comprenant un élément de type conduit d'échappement (2) et au moins un second élément de type conduit (3) s'étendant le long et de manière adjacente audit élément de type conduit d'échappement et couplé audit élément de type conduit d'échappement (2), **caractérisé en ce que** ledit au moins second élément de type conduit (3) est semi-rigide, en ce que dans ledit au moins second élément de type conduit (3), ledit conduit semi-rigide de délivrance ou alimentation en liquide de nettoyage (6) ou ledit câble électrique (7) peuvent être filetés et en ce qu'une gaine de revêtement tubulaire (4) est disposée au niveau des, et est liée auxdits, éléments de type conduit d'échappement (2) et second conduit semi-rigide (3), afin de connecter fermement ledit élément de type conduit d'échappement (2) et ledit au moins second élément de type conduit (3).

2. Tuyau flexible selon la revendication 1, **caractérisé en ce que** ledit élément de type conduit d'échappement (2) comprend un élément de type conduit fabriqué en un matériau plastique renforcé par un élément de renforcement enroulé (2a).

3. Tuyau selon les revendications 1 et 2, **caractérisé en ce que** ledit élément de type conduit d'échappement, ledit au moins second élément de type conduit (3) et ladite gaine tubulaire (4) forment une construction à corps unique flexible.

4. Tuyau selon l'une quelconque des revendications précédentes, **caractérisé en ce que** ladite gaine tubulaire (4) est fermement liée audit élément de type conduit d'échappement (2) et audit au moins second élément de type conduit (3) par un procédé de thermomoulage ou un procédé de moulage sous vide.

5. Tuyau selon l'une quelconque des revendications précédentes, **caractérisé en ce que** ledit tuyau (1) comprend, au moins au niveau de sa portion d'extrémité longitudinale, un corps d'extrémité (5) définissant une voie d'arrivée ou une voie de sortie s'adaptant à l'élément de type conduit d'échappement (2).

6. Tuyau selon l'une quelconque des revendications précédentes, **caractérisé en ce que** ledit corps d'extrémité (5) comprend un élément de manche moulé qui peut être couplé avec une voie de sortie d'échappement ou à l'enveloppe ou enceinte de la machine de nettoyage.
